Europäisches Patentamt

European Patent Office

Office européen des brevets

(19)

(11) Veröffentlichungsnummer: **0 092 225**
**B1**

(12) **EUROPÄISCHE PATENTSCHRIFT**

(45) Veröffentlichungstag der Patentschrift:
24.08.88

(21) Anmeldenummer: 83103759.3

(22) Anmeldetag: 19.04.83

(51) Int. Cl.⁴: **F 24 D 3/00, F 24 D 19/10**

(54) **Verfahren zum Steuern der dem Sekundärkreis eines Zweikreis-Heizungssystems zugeführten Wärmemenge und Steuerorgan hierfür.**

(30) Priorität: 20.04.82 DE 3214473

(43) Veröffentlichungstag der Anmeldung:
26.10.83 Patentblatt 83/43

(45) Bekanntmachung des Hinweises auf die Patenterteilung:
24.08.88 Patentblatt 88/34

(84) Benannte Vertragsstaaten:
AT BE CH FR GB IT LI LU NL SE

(56) Entgegenhaltungen:
EP - A - 0 035 085
EP - A - 0 048 517
DE - A - 2 655 513
FR - A - 2 211 108

(73) Patentinhaber: **Bähr, Thomas, Hirtenweg 11a,
D-3000 Hannover 1 (DE)**

(72) Erfinder: **Bähr, Thomas, Hirtenweg 11a,
D-3000 Hannover 1 (DE)**

ACTORUM AG

## Beschreibung

Die Erfindung betrifft ein Verfahren zum Steuern der dem Sekundärkreis eines Zweikreis-Heizungssystems zugeführten Wärmemenge unter Verwendung eines mit einem Stellglied ausgerüsteten Steuerorgans im Primärkreis.

Wird die dem Sekundärkreis eines Zweikreis-Heizungssystems zugeführte Wärmemenge von einem Steuerorgan gesteuert, bei welchem die Differenz zwischen Vorlauf- und Rücklauftemperatur des Sekundärkreises dem Stellglied des Steuerorgans im Primärkreis als Stellgrösse aufgegeben wird, dann steht diese Wärmemenge auf der Primärseite zur Verfügung, sobald das im Sekundärkreis zurückfliessende Medium in den Wärmetauscher oder das Mischventil eintritt. Die Folge ist eine sehr genaue Einhaltung einer bestimmten, festgelegten Vorlauftemperatur. Voraussetzung für ein solches Verfahren ist jedoch ein gleichbleibender Mengenstrom auf der Sekundärseite. Es gibt jedoch Heizungsanlagen, bei welchen der Mengenstrom grösseren Schwankungen unterworfen ist, z.B. Gebäudeheizungen, die mit einer grösseren Anzahl von thermostatischen Heizkörperventilen ausgerüstet sind, ein Tatbestand, der auch schon in der EP-A-0 048 517 beschrieben wurde. Mit einer ähnlichen Problematik befasst sich auch die DE-A-2 655 513, welche jedoch die Temperaturdifferenz- und Mengenstrom-Messung für den Primärkreis angibt, während das Steuerorgan im Sekundärkreis angeordnet ist.

Der Erfindung liegt die Aufgabe zugrunde, ein Verfahren der eingangs genannten Art anzugeben, bei welchem neben der Temperaturdifferenz zwischen Vor- und Rücklauf auch der Mengenstrom erfasst und verwertet wird.

Die Lösung besteht darin, dass das Produkt aus der Temperaturdifferenz zwischen Vorlauf- und Rücklauftemperatur und dem Mengenstrom im Sekundärkreis dem Stellglied des Steuerorgans im Primärkreis als Stellgrösse aufgegeben wird.

Mit dem Verfahren nach der Erfindung kann die primärseitige Wärmezufuhr auch bei stark schwankendem Mengenstrom im Sekundärkreis sehr schnell erfasst und genau bemessen werden.

Vorteilhafterweise wird der von den Temperaturfühlern vorgegebene Stellweg mit einem dem Mengenstrom entsprechenden Faktor multipliziert. Das entsprechende Steuerorgan weist ein motorisches Stellglied auf und ist mit einem Vorlauffühler, einem Rücklauffühler und einem Mengenstromfühler ausgestattet. Die Messsignale dieser Fühler werden von einem Regler aufgenommen und zu Stellsignalen verarbeitet.

Mit diesem Steuerorgan kann die Vorlauftemperatur weitgehend konstant gehalten werden, weil es die Temperaturdifferenz zwischen Vorlauf und Rücklauf sowie den Mengenstrom im Sekundärkreis misst und eine entsprechende Stellbewegung des Stellgliedes bewirkt.

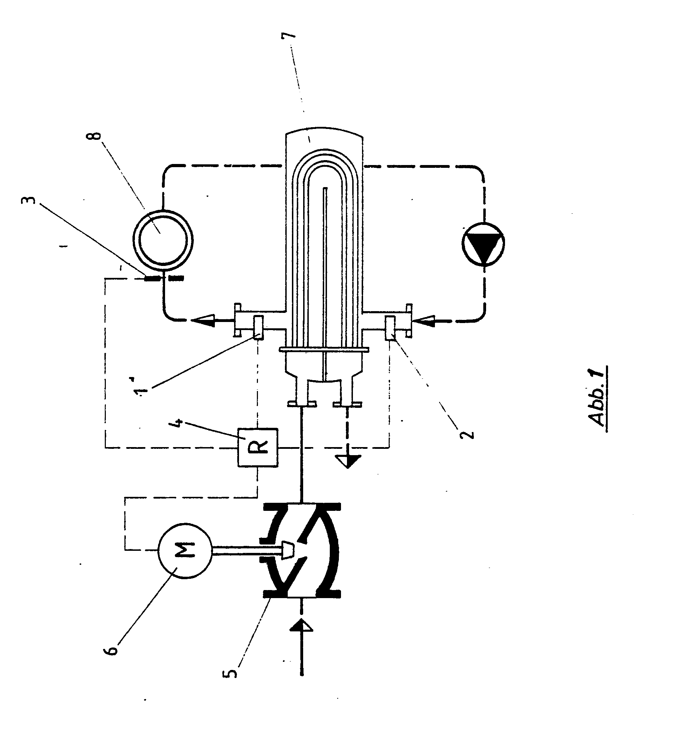

In der Zeichnung ist ein Ausführungsbeispiel der Erfindung dargestellt. Im Sekundärkreis des Wärmetauschers 7 befinden sich der Vorlauffühler 1, der Rücklauffühler 2 sowie der Mengenstromfühler 3. Sie sind mittels Übertragungsleitungen mit dem Regler 4 verbunden. Eine weitere Übertragungsleitung führt vom Regler 4 zum motorischen Stellglied 6 des Regulierventils 5.

Die Wirkungsweise des Systems gemäss Zeichnung ist folgende: Es sei angenommen, die Anlage werde primärseitig mit Heisswasser von 130 °C beheizt, während auf der Sekundärseite Warmwasser von 90°/70 °C erzeugt wird. Die Vorlauftemperatur von 90 °C im Sekundärkreis wird innerhalb enger Grenzen konstant gehalten. Solange die Anlage mit ungedrosseltem Mengenstrom arbeitet, werden sich Änderungen im Energiebedarf des Wärmeverbrauchers 8 allein auf die Rücklauftemperatur im Sekundärkreis auswirken. Arbeitet die Anlage also über längere Zeit mit halber Leistung, so wird das Rücklaufwasser mit 80 °C zum Wärmetauscher zurückfliessen. Dementsprechend wird sich das Ventil 5 auf halbe Durchflussmenge einstellen. Verringert sich unter diesen Umständen auch noch der Mengenstrom um 50%, so wird das Ventil 5 nur noch ein Viertel seiner maximalen Durchflussmenge passieren lassen.

## Patentansprüche

1. Verfahren zum Steuern der dem Sekundärkreis eines Zweikreis-Heizungssystems zugeführten Wärmemenge unter Verwendung eines mit einem Stellglied ausgerüsteten Steuerorgans im Primärkreis, dadurch gekennzeichnet, dass das Produkt aus der Temperaturdifferenz zwischen Vorlauf- und Rücklauftemperatur und dem Mengenstrom im Sekundärkreis dem Stellglied des Steuerorgans im Primärkreis als Stellgrösse aufgegeben wird.

2. Verfahren nach Anspruch 1 unter Verwendung eines Steuerorgans mit einem Vorlauftemperaturfühler, einem Rücklauftemperaturfühler und einem Mengenstromfühler, dadurch gekennzeichnet, dass die von dem Stellglied zurückgelegten Stellwege bei gleichzeitiger Erwärmung oder Abkühlung der Temperaturfühler addierbar, bei Erwärmung des einen Temperaturfühlers und Abkühlung des anderen Temperaturfühlers dagegen subtrahierbar sind und dass der von den Temperaturfühlern vorgegebene Stellweg mit einem dem Mengenstrom entsprechenden Faktor multipliziert wird.

3. Vorrichtung zur Durchführung des Verfahrens nach Anspruch 1 oder 2, mit einem im Primärkreis eines Zweikreis-Heizungssystems angeordneten Regulierventil (5) als Steuerorgan, das mit einem motorisch antreibbaren Stellglied (6) ausgerüstet ist, und mit einem mit dem Stellglied durch Stellwertübertragungsleitungen verbundenen Regler (4), dadurch gekennzeichnet, dass der Sekundärkreis einen Mengenstromfühler (3) sowie im Vorlauf und Rücklauf jeweils einen Temperaturfühler (1, 2) aufweist, wobei die Fühler (1, 2, 3) mit dem Regler (4) mittels Messwertübertragungsleitungen verbunden sind.

4. Vorrichtung nach Anspruch 3, dadurch gekennzeichnet, dass die Bauteile des Steuerorgans so bemessen sind, dass der Übertragungsbeiwert von dem grösstmöglichen Stellweg des Steuerorgans einerseits und der vorgegebenen maximalen Wärmemenge andererseits bestimmt ist.

## Claims

1. Process for controlling the quantity of heat fed to the secondary circuit of a two-circuit heating system, using in the primary circuit a control member equipped with a final control element, characterized in that the product of the temperature difference between flow temperature and return temperature and the mass flow in the secondary circuit is passed to the final control element of the control member in the primary circuit as a correcting variable.

2. Process according to Claim 1, using a control member with a flow temperature sensor, a return temperature sensor and a mass flow sensor, characterized in that the regulating distances covered by the final control element can be added when there is simultaneous heating or cooling of the temperature sensors, can be subtracted on the other hand when there is heating of one of the temperature sensors and cooling of the other temperature sensor and in that the regulating distance specified by the temperature sensors is multiplied by the factor corresponding to the mass flow.

3. Apparatus for implementation of the process according to Claim 1 or 2, with a control valve (5) arranged in the primary circuit of a two-circuit heating system as control member, which is equipped with a motor-drivable final control element (6), and with a controller (4) connected to the final control element by correcting value transfer lines, characterized in that the secondary circuit has a mass flow sensor (3) and, both in the flow and in the return, a temperature sensor (1, 2), the sensors (1, 2, 3) being connected to the controller (4) by means of measured value transfer lines.

4. Apparatus according to claim 3, characterized in that the components of the control member are dimensioned such the transfer coefficient is determined by the maximum possible regulating distance of the control member on the one hand and by the specified maximum quantity of heat on the other hand.

## Revendications

1. Procédé pour régir la quantité de chaleur fournie au circuit secondaire d'un système de chauffage à deux circuits à l'aide d'un dispositif de commande dans le circuit primaire équipé d'un élément de réglage, caractérisé en ce que le produit de la différence entre la température d'arrivée et la température de retour et du flux massique dans le circuit secondaire est appliqué à titre de grandeur réglante à l'élément de réglage du dispositif de commande dans le circuit primaire.

2. Procédé suivant la revendication 1, utilisant un dispositif de commande équipé d'un capteur de température d'arrivée, d'un capteur de température de retour et d'un capteur de flux massique, caractérisé en ce que les distances de réglage parcourues par l'élément de réglage peuvent être additionnées dans le cas d'un échauffement ou d'un refroidissement simultané des capteurs de température et être soustraites dans le cas d'un échauffement d'un capteur de température et d'un refroidissement de l'autre capteur de température et la distance de réglage prédéfinie par les capteurs de température est multipliée par un facteur correspondant au flux massique.

3. Appareil pour l'exécution du procédé suivant la revendication 1 ou 2, comportant, à titre de dispositif de commande, une valve de régulation (5) installée dans le circuit primaire d'un système de chauffage à deux circuits, qui est équipée d'un élément de réglage (6) motorisé et d'un régulateur (4) relié à l'élément de réglage par des lignes de transmission de valeur réglante, caractérisé en ce que le circuit secondaire comporte un capteur de flux massique (3) ainsi qu'un capteur de température (1, 2) dans l'arrivée et dans le retour, les capteurs (1, 2, 3) étant connectés au régulateur (4) au moyen de lignes de transmission de valeurs de mesure.

4. Appareil suivant la revendication 3, caractérisé en ce que les éléments du dispositif de commande sont dimensionnés de telle façon que la valeur correctrice de transmission soit déterminée par la distance de réglage la plus grande possible du dispositif de commande d'une part, et par le flux massique maximal prédéfini d'autre part.

*Abb. 1*